# EUROPÄISCHE PATENTSCHRIFT

(11) **EP 1 263 558 B1**
(45) Veröffentlichungstag und Bekanntmachung des Hinweises auf die Patenterteilung: **12.01.2005**
(21) Anmeldenummer: 00993593.3
(22) Anmeldetag: 27.12.2000
(51) Int. Cl.: B29B 17/00, B29B 7/48, B02C 18/44, B02C 18/14, B02C 18/22, B29B 7/42, B29C 47/50

(54) **AUFBEREITUNGSVORRICHTUNG FÜR KUNSTSTOFFMATERIAL**
PROCESSING DEVICE FOR SYNTHETIC MATERIAL
DISPOSITIF DE TRAITEMENT POUR PRODUITS EN MATIERE PLASTIQUE

(30) Priorität: 27.12.1999 AT 219399
(43) Veröffentlichungstag der Anmeldung: 11.12.2002
(73) Patentinhaber: Barth, Gerold, 4073 Wilhering (AT); Dobersberger, Manfred, 4061 Pasching (AT); Kroiss, Günter, 4061 Pasching (AT)
(72) Erfinder: BARTH, Gerold, 4073 Wilhering (AT); DOBERSBERGER, Manfred, 4061 Pasching (AT); KROISS, Günter, 4061 Pasching (AT); FELLINGER, Markus, 4061 Pasching (AT)
(74) Vertreter: Hehenberger, Reinhard, Dipl.-Ing.
(86) Internationale Anmeldenummer: PCT/EP2000/013271
(87) Internationale Veröffentlichungsnummer: WO 2001/047678

(56) Entgegenhaltungen:
- WO-A-99/61213
- DE-A- 2 240 689
- DE-A- 19 714 944
- DE-U- 20 011 774
- FR-A- 2 469 956
- US-A- 3 288 443
- US-A- 3 843 100
- US-A- 3 938 783
- US-A- 4 058 298
- US-A- 5 289 978
- US-A- 5 462 238

## Beschreibung

Die Erfindung bezieht sich auf eine Aufbereitungsvorrichtung zum Zerkleinern, Fördern und Plastifizieren und Granulieren oder zum Agglomerieren von, insbesonders thermoplastischem, Kunststoffmaterial, bestehend aus einer Zerkleinerungseinrichtung mit einer Beschickungseinrichtung und aus einem Schneckenextruder. Die US-A-4 058 298 zeigt eine derartige Vorrichtung.

Zur Wiederverarbeitung von Kunststoffgut ist es üblich dieses in einer Mühle zu zerkleinern und in einen Silo zu fördern. Aus dem Silo wird das vorzerkleinerte Kunststoffgut über ein Stopfwerk einem Extruder zugeführt.
Diese Konfiguration hat den Vorteil, daß der Silo eine Speicherkapazität für den Ausgleich von Schwankungen im Materialaufkommen bildet.

Der schlechte thermische Wirkungsgrad der Anordnung ist dabei nachteilig, weil die Zerkleinerungsenergie, die in der Form von Reibungswärme in der Mühle auf das Kunststoffmaterial übergeht, infolge der weiteren Zwischenlagerung im Speichersilo wieder an die Umgebung abgegeben wird und dadurch für den Extrusionsprozeß verloren ist. Diese Anordnung hat noch den Nachteil, daß der Platzbedarf erheblichen ist.

Bekannt sind auch Vorrichtungen, bei denen das aufzubereitende Kunststoffmaterial von oben in einen Behälter fällt, auf dessen Boden eine Messerscheibe rotiert, mit der das Material vorzerkleinert und durch eine in der Behälterwand angebrachte Öffnung gedrückt wird, wo das Kunststoffmaterial von einem Schneckenextruder übernommen und weiterverarbeitet wird.

Vorteil einer solchen Anordnung ist es, daß die Zerkleinerungsenergie, die in das zu verarbeitende Material in Form von Reibungswärme übergeht im Extrusionsprozeß genutzt werden kann. Von sehr erheblichen Nachteil ist aber die Begrenzung der Größe der Materialteile mit denen diese Anordnung beschickt werden kann und das Erfordernis einer stets gleichmäßig erfolgenden Beschickung, da es ansonsten schnell zu einer Überbelastung des Antriebsmotors und zu Störungen der Materialvorbereitung und des Materialdurchsatzes kommen kann, mit der Folge von Ausstoßschwankungen und der Bildung von stückig verdichteten oder sogar wenigstens teilweise aufgeschmolzenen Kunststoffmaterial. Es muß daher bei dieser Vorrichtung das zu verarbeitende Kunststoffmaterial in kleinen Stücken in den Aufgabebehälter zugeführt werden.

Die dadurch notwendige Trennung des zerkleinerten Materials nach Stückgröße erweist sich in den meisten Fällen jedoch, besonders bei gepreßtem Kunststoffmaterial oder bei großen soliden Teilen, als aufwendig und kompliziert, weil diese entweder manuell oder automatisch separiert werden müssen, wodurch ein erheblicher Aufwand an Arbeitskraft bzw. ein zusätzlicher bedeutender Investitionsaufwand in Form einer Grobzerkleinerungsmaschine notwendig wird.

In einer weiters noch bekannt gewordene Vorrichtung zum Aufbereiten von Kunststoffmaterial und Füllmaterial, wie z.B. Sägespänen. Das noch feuchte Material soll vorgetrocknet in einen Extruder gefördert werden.

Dabei besteht der Nachteil, daß die geeignete Materialgröße, für die Beschickung begrenzt ist, da auch hier das Material durch Schwerkraft in den Beschickungstrichter gelangt und es bei zu großen Materialstücken zur Überlastung des Motors kommen kann.

Bei einer anderen Einrichtung zur Aufbereitung von Kunststoffmaterial ist eine Beschickungsvorrichtung einer mit Messern bestückten Aufbereitertrommel vorgeordnet, bei der die Materialansammlung oder die unterstützenden Förderflügel einer Förderschnecke das zerkleinerte Material durch eine des Förderrohres der Aufbereitertrommel in einen Schneckenextruder befördern. Beim Durchlauf des Extruders wird das Material plastifiziert und granuliert.

Bei dieser Anordnung ist der Antriebsaufwand bedeutend, weil Extruder und Aufbereitertrommel gesondert angetrieben werden. Dazu kommt die Notwendigkeit, dass die Abstände zwischen den fördernden Teilen von Aufbereitertrommel und Extruderschnecke möglichst klein sein sollen, damit die Übergabe stets einwandfrei sichergestellt ist, was eine aufwendige Konstruktion erforderlich macht.

Schließlich treten am Ende der Förderstrecke an der Aufbereitertrommel bedeutende Gegenkräfte auf, die durch konstruktive Maßnahmen, besonders zur Entlastung des Lagers und dessen Abdichtung, verringert werden müssen.

Aufgabe der Erfindung ist es, die Nachteile der bekannten Aufbereitungsvorrichtungen, wie sie eingangs beschrieben wurden, zu beseitigen. Die Erfindung soll den Prozeßablauf bei der Aufbereitung unabhängig von der Größe und der Form des Materials, sowie von der Menge, die sich im Trichter befindet, vergleichmäßigen und die Förderung des zerkleinerten Kunststoffmaterials ohne Störungen ermöglichen, wobei ein einfacher Aufbau und eine besonders einfache Antriebsanordnung geschaffen werden soll und weiters die Vorteile der Nutzbarmachung der Zerkleinerungsenergie im Extrusionsprozeß weitgehend zu erhalten und überdies eine einfach aufgebaute, wenig störungsanfällige, unterschiedliche Beschickungsmengen ausgleichende, Aufbereitungsvorrichtung zu schaffen.

Diese Aufgabe wird bei einer Aufbereitungsrichtung gemäß dem Oberbegriff des Anspruches 1 mit den Merkmalen des kennzeichnenden Teiles des Anspruches 1 gelöst. Die Unteransprüche betreffen besonders vorteilhafte Ausgestaltungen der Erfindung und bilden zusammen mit dem Anspruch 1 gleichzeitig einen Teil der Beschreibung der Erfindung.

Durch die fluchtende Anordnung der Extruderschnecke mit der Aufbereitertrommel wird eine gerade durchgehende Förderstrecke erzielt, für die ein einziger Antriebsmotor und ein einziges Getriebe ausreichend sind.
Dabei stellt die einstückige Ausführungsform eine baulich sehr einfache Form dar, die entsprechend preisgünstig herstellbar ist, während die einstückige Ausbildung von Aufbereitertrommel oder Förderschnecke besonders bei kurzen Ausführungen, wie sie für das Agglomerieren geeignet sind, besonders einfach im Aufbau sind, ermöglicht die lösbare Verbindung von Extruderschnecke und Aufbereitertrommel eine vereinfachte Wartung und Reparatur und Montage.

Die Verbindung von Förderrohr und Schneckenrohr des Extruders mittels eines Übergangsrohres ermöglicht Anpassungsmaßnahmen zwischen den rotierenden und den feststehenden Teilen gleichermaßen.

Die lösbare Verbindung von Förderrohr und Schneckenrohr mit oder ohne Zwischenschaltung eines Übergangsrohres verbessert die Zugänglichkeit weiter.

Die Verbindung einer Förderschnecke mit einer vorgeordneten Aufbereitertrommel mit Siebung des zerkleinerten Kunststoffmaterials bringt eine Erweiterung der Verarbeitungsmöglichkeiten auf Schmelz- und Verdichtungsmassen und auf paketweise verdichtetes Folienmaterial.

Bei Anwendung einer vorgeordneten Aufbereitertrommel oberhalb der Förderschnecke wird das Kunststoffmaterial durch ein verschraubbares Siebsegment befördert, das einen Teil des Förderrohres bildet und an dessen unteren Bereich von einer Trogwand des anschließenden Schneckentroges der Förderschnecke in Umlaufrichtung der Aufbereitertrommel, wenigstens über ein Viertel des Umfanges des Förderrohres reicht.

Die Förderschnecke läuft in dem Schneckentrog und ist an dem extruderseitigen Endbereich an einer zylindrischen Rohrführung abstützend geführt, wodurch die auf das Ende der Förderschnecke direkt und von der mit ihr lösbar, mechanisch verbundenen Extruderschnecke wirkenden Kräfte auf vorteilhafte und einfache Weise abgeleitet werden.

Der Antrieb von Extruderschnecke und Aufbereitertrommel erfolgt mit einem einzigen Motor und einem einzigen Getriebe, wodurch eine wesentliche Vereinfachung und Verbilligung besonders bei kleinen Aufbereitungsvorrichtungen erreicht wird.
Der Antrieb der vorgeordneten Aufbereitertrommel kann vom Getriebe für die Förderschnecke und den Extruder abgeleitet sein oder bei größeren erforderlichen Leistungen aus einem gesonderten Antrieb aus Motor und Getriebe bestehen.

Die Anbringung eines Übergangsrohres kann am einfachsten durch Anflanschen an das Schneckenrohr des Extruders und an das Förderrohr bzw. das Machinengehäuse erfolgen.

Für die Verbesserung des Eintritts des zerkleinerten Kunststoffmaterials ist die Anwendung eines auf das Schneckenrohr aufgesetzten Mundstückes, mit dem die weitere allmähliche Verengung des Durchmessers der Förderstrecke auf den Durchmesser der Extruderschnecke möglich ist, von Vorteil, weil damit der Stopfwiderstand verringert und das Förderverhalten des Kunststoffgutes verbessert wird, so daß keine Unterbrechungen in der Förderung durch Verstopfungen oder Anschmelzungen erfolgen.

Ebenso wichtig für den ungehinderten oder zumindest wenig behinderten Fluß des Kunststoffmaterials in Förderrichtung ist die Ausgestaltung des Lagerkörpers für das extruderseitige Lager der Aufbereitertrommel, wobei die Verwendung von strömungsgünstigen Streben zwischen dem äußeren und dem inneren Lagerteil vorteilhaft ist. Zur Verringerung der Störanfälligkeit des Lagers ist die Anbringung einer Luftspülung zur Reinigung von Gutteilen wichtig, die Zu- und Ableitungen über diese Streben des Lagerkörpers erhält.

Die Herstellung einer lösbaren Verbindung zwischen der Extruderschnecke und der Aufbereitertrommel kann mit den dafür bekannten Verbindungsmitteln erfolgen; besonders einfach mit einer Nut-und Federkeilverbindung direkt, wobei eine zusätzliche Verschraubung von außen eine leicht kontrollierbare sichernde Verbindung bildet.

Die Verwendung eines Kegelkörpers, der im Übergangsrohr angeordnet ist, ergibt eine allmähliche fließende Zusammenführung des Fördergutes von dem großen Durchmesser der Aufbereitertrommel auf den kleinen Durchmesser des Schneckenrohres des Extruders, der für das Plastifizieren geeignet ist, wodurch Betriebsstörungen vermieden werden.

Die zweiteilige Gestaltung des Kegelkörpers, von denen der extruderseitige Teil an dem Lagerzapfen des extruderseitigen Lagers der Aufbereitertrommel verschraubt ist und an der Flanke der Extruderschnecke abstützt, während der lagerseitige Teil auf dem Lagerzapfen des extruderseitigen Lagers der Aufbereitertrommel befestigt ist und in besonders einfacher Weise aufgekeilt ist, bildet eine wirksame und mit wenig Aufwand lösbare Antriebsverbindung mit der Montage- und Wartungsarbeiten erleichtert werden.
Es können aber die beiden Teile des Kegelkörpers auch miteinander verschraubt sein.

Bei kegeliger Gestaltung des Übergangsrohres bildet sich zwischen diesem und dem Kegelkörper ein hohlkegeliger Förderspalt durch den eine allmähliche Zusammenführung und Vorverdichtung des Fördergutes von dem großen Durchmesser der Aufbereitertrommel auf den kleinen Durchmesser des Schneckenrohres des Extruders an der Eintrittsöffnung bewerkstelligt wird, wodurch ein geringer Förderwiderstand des Kunststoffmaterials und ein besonders störungsarmer Betrieb erreicht wird.
Dabei kann je nach Durchmesserverhältnissen, Materialart und Bearbeitungsweise ein Öffnungswinkel des Förderspaltes von wenigen Graden und vorzugsweise von 10° bis 90° und im besonderen von etwa 60°, bei Anordnungen für das Plastifizieren verwendet werden.

Der kegelförmige Förderspalt für das Kunststoffmaterial, der das geordnete Zusammenführen auf den kleineren Durchmesser des Schneckenrohres des Extruders ohne störende Verstopfungen ermöglicht, kann in der Breite vorzugsweise gleichbleibend ausgebildet sein oder bei Abänderungen des Verdichtungsgrades im Bereich des Förderspaltes auch mit steigender oder sich verringernder Breite verlaufend ausgebildet sein.
Beim Agglomerieren wird wegen der zumeist gleichen Rohrdurchmesser ein kegeliges Übergangsrohr entbehrlich sein und der Öffnungswinkel kann dann bis herab zu 0° betragen, sodaß das Förderrohr und das Extruderrohr auch unmittelbar miteinander verbunden sein können.

Zur Beförderung des Transportes des Kunststoffmaterials in Förderrichtung und für das wirksame Stopfen an der Eintrittsöffnung des Schneckenrohres des Extruders ist die Anbringung eines einzigen Förderflügels ausreichend, besonders wenn dieser in Richtung auf das Schneckenrohr fördernd angestellt ist. Um den kegeligen Förderspalt zu überstreichen ist eine fluchtende Anordnung der beiden Teile des Förderflügels nicht erforderlich und die Gestaltung, zweiteilig, entsprechend den beiden Teilen des Kegelkörpers am einfachsten und günstigsten.

Zur Einstellung der Förderwirkung ist die Anwendung einer Zustelleiste im Bereich des Förderflügels, mit der ein Spalt zwischen dieser und dem Förderflügel einstjustierbar ist, eine einfache und sehr wirksame Maßnahme.
Das Einsetzen der Zustelleiste durch eine Öffnung des Übergangsrohres hindurch erleichtert die Einstellung.
Die Führung einer am Übergangsrohr verschraubten Gegenplatte und die Einstellung der Zustellung auf den Förderflügel mit einer Verschraubung mit Zug- und Druckschrauben ist eine zuverlässige einfache Ausgestaltung.

Die Einstellung des Spaltes zwischen Zustelleiste und Förderflügel bestimmt besonders wirksam und einfach die Beeinflussung des Schlupfes und damit das Förderverhalten des Kunststoffmaterials.

Zur Verbesserung der Förderwirkung ist die Anordnung von mehreren Einblasdüsen für Luft an der tiefsten Stelle des Förderrohres und in Förderrichtung ausgerichtete und voneinander beabstandet, von Vorteil mit denen die Bewegung des Kunststoffmaterials in Richtung auf die Austrittsöffnung des Förderrohres unterstützt wird.

Für die Beseitigung von Störungen und für die Wartung stellt die Ausbildung des Förderrohres mit einem abschraubbaren Rohrsegment, das über die gesamte Länge und wenigstens über ein Viertel des Umfanges in Umlaufrichtung reicht, vorzugsweise von der tiefsten Stelle der Innenwand ausgehend, eine besonders einfache Lösung dar.

Die Messer auf der Aufbereitertrommel sind in Reihen in Abständen voneinander angeordnet und in Umlaufrichtung schrittweise versetzt angebracht und arbeiten mit einem ortsfesten Gegenmesser zusammen, das von ihnen durchgriffen wird, wobei ein öffnender Schnitt einstellbar ist, mit dem ein geringer Schnittwiderstand und eine Verringerung der Belastungsspitzen erreicht wird.

Ein zweites, als Abstreifer dienendes Gegenmesser ist an der zweiten Längskante der Zuführungsöffnung der Aufbereitertrommel vorgesehen mit dem der Rücktransport des Kunststoffmaterials in den Aufgabebereich vermieden wird.

Die Beschickung der Aufbereitertrommel geschieht mit einer Aufgabevorrichtung einfacher Bauweise bei der ein Schieber oder zwei nebeneinander liegende, bei kleinen Baugrößen vorzugsweise zylindrische, Schieber mit jeweils einem pneumatischen oder hydraulischen Kraftzylinder, der sich an einem Hüllrohr abstützt, oder von einem elektrischen Antrieb gegen die Aufbereitertrommel geschoben wird/werden und das Kunststoffmaterial in den Erfassungsbereich der Messer geführt wird.

Bei größeren Baugrößen oder wegen vorhandener Installationen können die hydraulisch Kraftzylinder oder die elektrischen Antriebe Anwendung finden und es kann auch ein einziger, kastenförmiger Schieber über die Breite der Bodenplatte reichend vorteilhaft verwendet werden.

Für eine ausreichende Zuführung des Kunststoffmaterials ist die Zuführungsöffnung vorteilhaft über mehr als ein Viertel des Umfanges der Aufbereitertrommel, von oben herab verlaufend angebracht und reicht über deren gesamte Länge.
Dabei ist ein Zuführschacht mit fallend geneigter Bodenplatte auf der die Schieber bewegt werden für die Einspeisung besonders günstig.

Die Steuerung der Schieber geschieht selbsttätig über eine automatisch gesteuerte Druckanlage, mit der die Preßkraft in Abhängigkeit von der Leistung und insbesonders über die Stromaufnahme des Antriebsmotors geregelt wird, um eine gleichmäßige Beaufschlagung und Belastung zu erreichen.

Die Drehzahl der Aufbereitertrommel wird vorteilhafterweise in Abhängigkeit von der Temperatur des Kunststoffmaterials an der Austrittsöffnung des Förderrohres geregelt um Betriebsstörungen durch Verbacken zu vermeiden.

Bei Anwendung einer Förderschnecke ist es von Vorteil an Stelle des beschriebenen Lagers eine Führungsbüchse am Ende des zylindrischen Teils der Förderschnecke vozusehen mit der die Abstützung am Maschinengehäuse erfolgen kann.

Es ist besonders bei Extrudern zu Agglomerieren vorteilhaft, anstelle der beschrieben Lagerung von Aufbereitertrommel oder Förderschnecke eine Endseitige Lagerung der Extruderschnecke vorzunehmen und den Gutaustrag dann nach unten anzuordnen.

Die Erfindung wird an Hand der Zeichnung beschrieben.
Es zeigt:

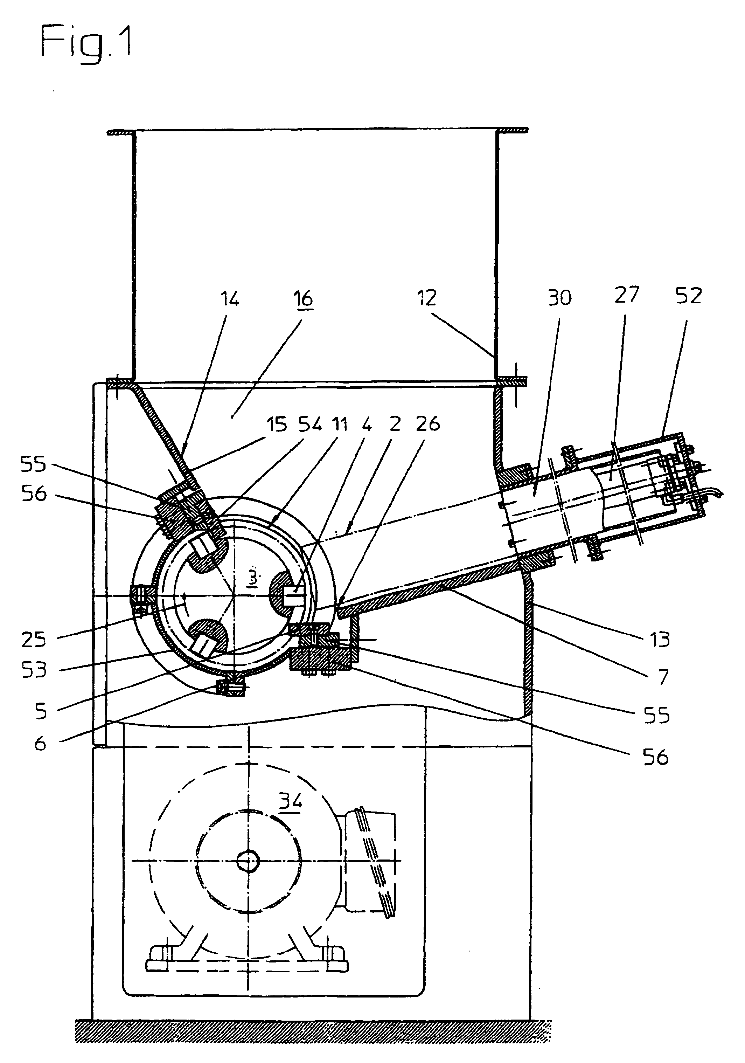

- Fig. 1: die Aufbereitungsvorrichtung in Seitenansicht, im Schnitt,

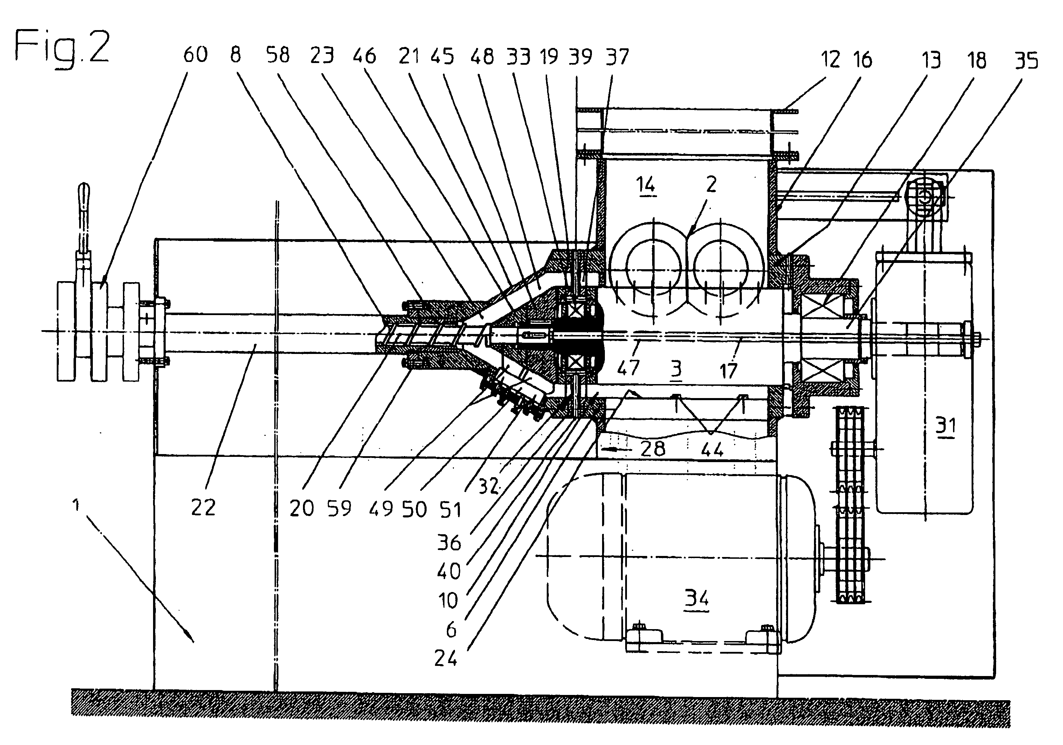

- Fig. 2: einen Querschnitt durch die Aufbereitungsvorrichtung nach Fig.1,

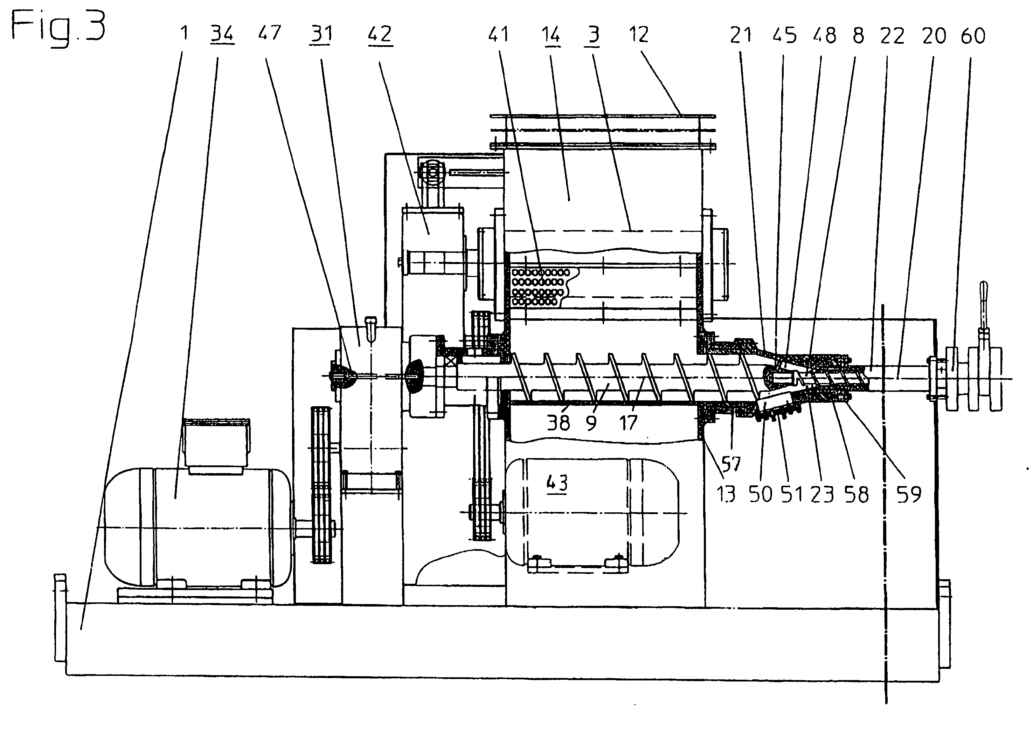

- Fig. 3: eine Aufbereitungsvorrichtung mit Förderschnecke, in Seitenansicht, im Schnitt,

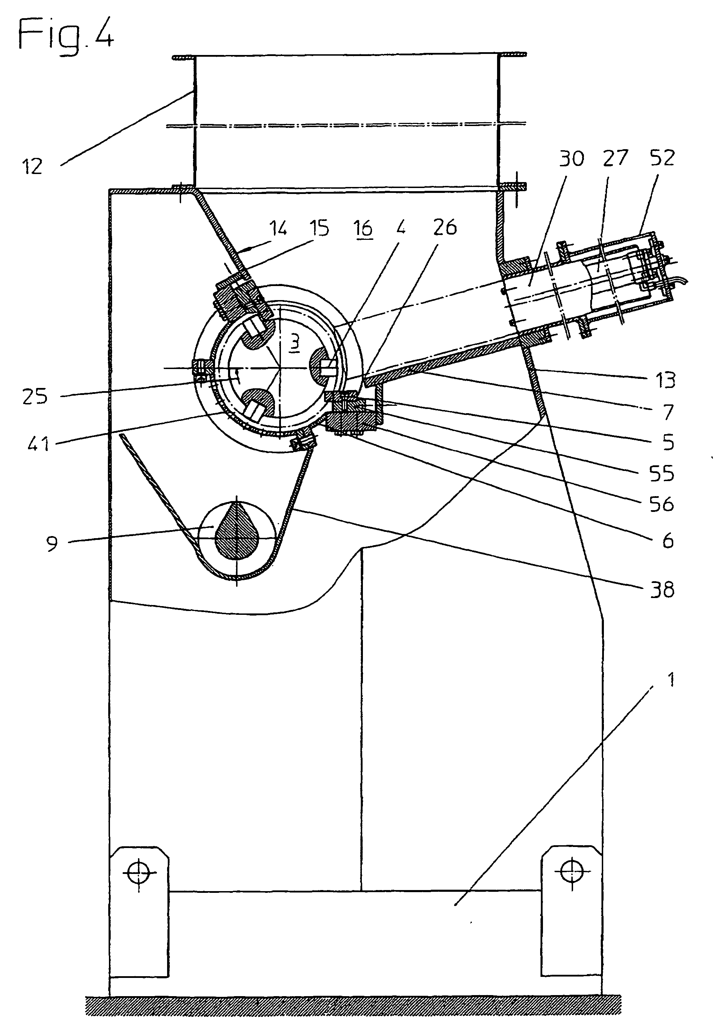

- Fig. 4: die Aufbereitungsvorrichtung mit Förderschnecke, nach Fig. 3, in Seitenansicht, im Schnitt,

An einem Maschinenrahmen 1 ist ein Förderrohr 6 angebracht, in dem eine Aufbereitertrommel 3 angetrieben umläuft, die mit der Antriebswelle 35 in einem getriebeseitigen Lager 18, das an das Maschinengehäuse 13 angeflanscht ist und in einem extruderseitigen Lager 19 mit einem Wellenzapfen gelagert ist.

Mit der Längsachse 17 der Aufbereitertrommel 3 fluchtend ist die Längsachse 20 einer Extruderschnecke 8 ausgerichtet, die mit der Aufbereitertrommel 3 lösbar mechanisch verbunden ist, in einem Schneckenrohr 22 des Extruders umläuft, an dessen freien Ende eine Filtrier- und Granuliereinrichtung 60 angebracht ist.

Die Anordnung wird von einem Antriebsmotor 34 über ein Getriebe 31 angetrieben.

Die Aufbereitertrommel 3 ist mit Messern 4 bestückt, die in drei Reihen über den Umfang versetzt, verteilt angeschraubt sind und mit einem ortsfesten Gegenmesser 5 an der Öffnungskante 26 der Einlaufseite der Messer 4 an einer Zuführungsöffnung 11 mit einem Messerhalter 55 an einem Aufnahmeteil 56 befestigt sind.

Auf der gegenüberliegenden Längskante der Zuführungsöffnung 11 ist in gleicher Weise ein ortsfestes Abstreifgegenmesser 54 angebracht.

Das Förderrohr 6 ist mit dem Schneckenrohr 22 durch ein kegelförmiges Übergangsrohr 21 verbunden, das an der Austrittsöffnung 10 des Förderrohres 6 und an der Eintrittsöffnung 23 des Schneckenrohres 22 angeflanscht ist und das die Durchmesserunterschiede zwischen Förderrohr 6 und Aufbereitertrommel 3 überbrückt.

Für die Anbringung des extruderseitigen Lagers 19 ist an das Förderrohr 6 der Aufbereitertrommel 3 anschließend, am Maschinengehäuse 13 ein Lagerkörper 32 zwischen dieses und das Übergangsrohr 21 geflanscht, das aus einem inneren Lagerteil 33 für das Lager 19 und einem äußeren Tragring 36 besteht, wobei beide Teile mit mehreren Verbindungsstreben 37 verbunden sind, die eine strömungsgünstige Form in Förderrichtung 28 des Kunststoffmaterials aufweisen und in denen die Schmierungsleitungen und die Zuleitung 39, sowie die Ableitung 40 für die Lagerluftspülung verlaufen, die zur Reinigung des Lagerbereiches dient.

Die mechanische Verbindung der Extruderschnecke 8 mit der Äufbereitertrommel 3 ist einerseits durch eine Nut-Federkeilverbindung im extruderseitigen Lagerzapfen der Aufbereitertrommel 3 hergestellt und wird andererseits durch einen zweiteiligen Lagerkörper 45,46 gebildet, von dem der lagerseitige Kegelkörper 45 auf dem Lagerzapfen der Aufbereitertrommel 3 mit einer Nut- und Federkeilverbindung befestigt ist und der extruderseitige Kegelkörper 46 auf der Extruderschnecke 8 sitzend und an eine Flanke derselben abgestützt, mit dem Lagerzapfen der Aufbereitertrommel 3 verschraubt ist.

Zwischen dem Übergangsrohr 21 und dem zweiteiligen Kegelkörper 45,46 verbleibt ein gleichförmiger kegelförmiger Förderspalt 48 für die Förderung des Kunststoffmaterials, der einen Öffnungswinkel von 60° besitzt.

In diesem Förderspalt 48 läuft ein Förderflügel 49 um, der zweiteilig ausgebildet ist und von dem je ein Teil auf einen der beiden Kegelkörper 45,46 befestigt ist und in Förderrichtung 28 zur Eintrittsöffnung 23 des Extruders hin fördernd angestellt ist.

An der Eintrittsöffnung 23 des Schneckenrohres 22 ist ein Mundstück 58 von einem Bundflansch 59 gehalten angebracht, dessen Innendurchmesser an der Eintrittsöffnung 23 des Schneckenrohres 22 größer ist, als der Außendurchmesser der Extruderschnecke 8 und der sich allmählich auf deren Außendurchmesser verringert und die in Abständen am Umfang verteilt angebrachten Leisten den Außendurchmesser der Extruderschnecke aufweisen.

Die Extruderschnecke 8 ist mit einer vom Getriebe 31 her, durch eine Bohrung der Antriebswelle 35 und der Aufbereitertrommel 3 hindurchgeführten Halteschraube 47 verschraubt.

Für die Einstellung der Förderung des Kunststoffmaterials ist gegenüber dem Förderflügel 49 eine Zustelleiste 50 in das Übergangsrohr 21 eingesetzt, die mit Führungen in einer am Übergangsrohr 21 verschraubten Gegenplatte 51 geführt und einer aus Zug- und Druckschrauben bestehenden Verschraubung bis auf einen Spalt, zur Einstellung des Schlupfes des Kunststoffmaterials zwischen der Zustelleiste 50 und dem Förderflügel 49, zustellbar eingerichtet ist.

An der Innenwand 24 des Förderrohres 6 sind an der tiefsten Stelle in Förderrichtung 28 beabstandet und in diese Wirkung wirkend zwei Einblasdüsen 44 für Druckluft angebracht.

Das Kunststoffmaterial wird von einer Aufgabevorrichtung 2 aufgegeben, die von zwei nebeneinander liegenden Schiebern 30 gebildet wird, die auf einer schräg nach unten zur Öffnungskante 26 der Zuführungsöffnung 11 geneigten Bodenplatte 7 jeweils von einem pneumatischen Kraftzylinder 27 verschoben werden, der sich an einem Hüllrohr 51 abstützt.

Das Kunststoffmaterial wird über einen Führungsschacht 14 mit schräger Vorderwand 15 und mit Seitenwänden 16, die mit der Zuführöffnung 11 abschließen, der Aufgabevorrichtung 2 zugeführt.

Das Förderrohr 6 ist mit einem abnehmbar angeflanschten Rohrsegment 53 versehen, das von der tiefsten Stelle in Umlaufrichtung 25 über ein Viertel des Umfanges des Förderrohres 6 reicht.

Bei einer nicht erfindungsgemäßen Aufbereitungsvorrichtung ist die Extruderschnecke 8 mit ihrer Längsachse 20 zu der Längsachse 17 einer mit ihr mechanisch verbundenen Förderschnecke 9 fluchtend eingerichtet und ebenfalls mit einer Halteschraube 47 von der Seite des Getriebes 31 her verschraubt.

Die Förderschnecke 9 ist in einem Schneckentrog 38 angeordnet, der nach oben zum Förderrohr 6 der Aufbereitertrommel 3 hin offenen ist.

Das freie Ende der Förderschnecke 9 ist als Kegelkörper 45 ausgebildet und ergibt dem umgebenden Übergangsrohr 21 einen kegelförmigen Förderspalt 48 bis zur Eintrittsöffnung 23 des Schneckenrohres 22 reichend.

Die Förderschnecke 9 ist an dem extruderseitigen Endbereich an einer zylindrischen Führungsbüchse 57, die an den Schneckentrog 38 anschließend, an einem Maschinenrahmen 13 angebracht ist, abstützend geführt.

Im Abstand über der Förderschnecke 9 ist parallel dazu die Aufbereitertrommel 3 angeordnet und von einem gesonderten Getriebe 42 über einen gesonderten Antriebsmotor 43 angetrieben gelagert und läuft in einem Förderrohr 6 um, das mit einem Siebsegment 41, das abschraubbar angeflanscht ist, versehen ist, welches von der Trogwand des Schneckentroges 38 der Förderschnecke 9 in Umlaufrichtung 25 der Aufbereitertrommel 3 über ein Viertel des Umfanges des Förderrohres 6 reicht.

Das zerkleinerte Kunststoffmaterial fällt durch das Siebsegment 41 in den Schneckentrog 38 und wird von der Förderschnecke 9 zur Extruderschnecke 8 befördert.

Eine Zustelleiste 50 ist in gleicher Weise, wie bei der ersten Ausführungsform der Erfindung, im Übergangsrohr 21 angebracht und gegen das kegelig ausgebildete Ende der Förderschnecke 9 zustellbar eingerichtet.

Im übrigen sind die Bauelemente entsprechend denen wie sie aus der erstbeschriebenen Anordnung der Erfindung zu entnehmen sind. Insbesonders sind Anordnung und Aufbau der Aufgabevorrichtung 2 gleich.

### Bezugszeichenverzeichnis

- 1: Maschinenrahmen
- 2: Aufgabevorrichtung
- 3: Aufbereitertrommel
- 4: Messer der Aufbereitertrommel 3
- 5: ortsfestes Gegenmesser
- 6: Förderrohr
- 7: Bodenplatte
- 8: Extruderschnecke
- 9: Förderschnecke
- 10: Austrittsöffnung des Förderrohrs 6
- 11: Zuführungsöffnung des Förderrohrs 6
- 12: Zuführungstrichter
- 13: Maschinengehäuse
- 14: Zuführungsschacht des Zuführungstrichters 12
- 15: Vorderwand des Zuführungstrichters 12
- 16: Seitenwand des Zuführungstrichters 12
- 17: Längsachse der Aufbereitertrommel 3 oder der Förderschnecke 9
- 18: getriebeseitiges Lager der Aufbereitertrommel 3 oder der Förderschnecke 9
- 19: extruderseitiges Lager der Aufbereitertrommel 3 oder der Förderschnecke 9
- 20: Längsachse der Extruderschnecke 8
- 21: Übergangsrohr zwischen Förderrohr 6 und Schneckenrohr 22
- 22: Schneckenrohr der Extruderschnecke 8
- 23: Eintrittsöffnung des Schneckenrohres 22
- 24: Innenwand des Förderrohrs 6
- 25: Umlaufrichtung der Aufbereitertrommel 3 oder der Förderschnecke 9
- 26: Öffnungskante der Zuführungsöffnung 11
- 27: pneumatischer Kraftzylinder des Schiebers 30
- 28: Förderrichtung
- 29 30: Schieber der Aufgabevorrichtung 2
- 31: Getriebe für Aufbereitertrommel 3 oder Förderschnecke 9 und die Extruderschnecke 8
- 32: Lagerkörper des extruderseitigen Lagers 19
- 33: inneres Lagerteil des Lagerkörpers 32
- 34: Antriebsmotor der Aufbereitungseinrichtung
- 35: Antriebswelle der Aufbereitertrommel 3
- 36: äußerer Tragring des Lagerkörpers 32
- 37: Verbindungsstrebe des Lagerkörpers 32
- 38: Schneckentrog der Förderschnecke 9
- 39: Zuleitung für die Lagerluftspülung
- 40: Ableitung für die Lagerluftspülung
- 41: Siebsegment für die Aufbereitertrommel 3
- 42: gesondertes Getriebe der Aufbereitertrommel 3
- 43: gesonderter Antriebsmotor der Aufbereitertrommel 3
- 44: Einblasdüse für Spülgas, wie Luft
- 45: lagerseitiger Kegelkörper
- 46: extruderseitiger Kegelkörper
- 47: Halteschraube für die Schneckenwelle 22 des Extruders
- 48: kegelförmiger Förderspalt
- 49: zweiteiliger Förderflügel der Kegelkörper 45, 46
- 50: Zustelleiste im Übergangsrohr 21
- 51: Gegenplatte der Zustelleiste 50
- 52: Hüllrohr des pneumatischen Schiebers 30
- 53: Rohrsegment des Förderrohres 6
- 54: Abstreifgegenmesser
- 55: Messerhalter für die Messer 4
- 56: Aufnahmeteil für den Messerhalter 55
- 57: zylindrische Führungsbüchse der Förderschnecke 9
- 58: Mundstück des Schneckenrohres 22
- 59: Bundflansch des Übergangsrohres 21
- 60: Filtrier- und/oder Granuliervorrichtung

## Patentansprüche

1. Aufbereitungsvorrichtung für, insbesonders thermoplastisches, Kunststoffmaterial, bestehend aus einer Zerkleinerungsvorrichtung mit einem vorgeordneten Zuführungsschacht, und aus einer unmittelbar anschließenden Extrudiervorrichtung zum Plastifizieren und/oder zum Granulieren und insbesondere zum Agglomerieren, bei der die Zerkleinerungsvorrichtung aus einer einzigen messertragenden Aufbereitertrommel (3) besteht, die in einem im wesentlichen waagrecht angeordneten Förderrohr (6) angetrieben umläuft, das mit einer nach oben gerichteten Zuführungsöffnung (11) und mit einer axialen Austrittsöffnung (10) für das zerkleinerte Kunststoffmaterial versehen ist, wobei die Aufbereitertrommel (3) mit ihrer Längsachse (17) zur Längsachse (20) der Extruderschnecke (8) fluchtend angeordnet ist, mit einem Getriebe (31) und einem Antriebsmotor (34) zum Antreiben der miteinander mechanisch lösbar verbundenen Aufbereitertrommel (3) und der Extruderschnecke (8), wobei die Austrittsöffnung (10) des Förderrohres (6) und die Eintrittsöffnung (23) des Schneckenrohres (22) der Extruderschnecke (8) axial hintereinander zugeordnet über ein Übergangsrohr (21) miteinander verbunden sind, das an der Seite der Austrittsöffnung (10) des Förderrohres (6) am Maschinengehäuse (13) der Zerkleinerungsvorrichtung und an der Seite der Eintrittsöffnung (23) des Schneckenrohres (22) des Schneckenextruders an diesem angeflanscht ist, **dadurch gekennzeichnet, dass** zwischen dem Übergangsrohr (21) und dem Maschinengehäuse (13) ein Lagerkörper (32) für das extruderseitige Lager (19) der Aufbereitertrommel (3) zwischengeflanscht ist, dessen innerer Lagerteil (33) im wesentlichen den Durchmesser der Aufbereitertrommel (3) besitzt und dessen äußerer Tragring (36) einen Durchmesser aufweist, der im wesentlichen dem Innendurchmesser des Förderrohres (6) entspricht, und dass der innere Lagerteil (33) und der äußere Tragring (36) durch mehrere strömungsgünstig geformte Verbindungsstreben (37) abgestützt verbunden sind.

2. Aufbereitungsvorrichtung nach Anspruch 1, **dadurch gekennzeichnet, dass** der zwischen dem Übergangsrohr (21) und dem Maschinengehäuse (13) eingesetzte Lagerkörper (32) für das extruderseitige Lager (19) der Aufbereitertrommel (3) zwischengeflanscht ist, dessen innerer Lagerteil (33) im wesentlichen den Durchmesser der Aufbereitertrommel (3) und dessen äußerer Tragring (36) einen Durchmesser aufweist, der im wesentlichen dem Innendurchmesser des Förderrohres (6) entspricht und beide untereinander mit mehreren strömungsgünstig geformten Verbindungsstreben (37) abgestützt verbunden sind.

3. Aufbereitungsvorrichtung nach Anspruch 2, **dadurch gekennzeichnet, dass** in den Verbindungsstreben (37) die Zuleitung (39) und die Ableitung (40) für die Lagerluftspülung und die Schmierungsleitungen geführt sind.

4. Aufbereitungsvorrichtung nach Anspruch 1, **dadurch gekennzeichnet, dass** der im übergangsrohr (21) angeordnete Kegelkörper als zweiteiliger Kegelkörper ausgebildet ist, dessen lagerseitiger Kegelkörper (45) auf dem extruderseitigen Lagerzapfen der Aufbereitertrommel (3), vorzugsweise mit einer Nut und Federkeilverbindung, festgelegt ist und dessen extruderseitiger Kegelkörper (46) auf der Extruderschnecke (8) sitzend mit dem extruderseitigen Lagerzapfen der Aufbereitertrommel (3) oder mit dem lagerseitiger Kegelkörper (45), verschraubt ist.

5. Aufbereitungsvorrichtung nach einem der Ansprüche 1 oder 4, **dadurch gekennzeichnet, dass** zwischen dem Kegelkörper oder dem zweiteiligen Kegelkörper (45; 46), und dem Übergangsrohr (21) ein kegelförmiger Förderspalt (48) gebildet ist, der eine gleichbleibende Breite aufweist, in dem wenigstens ein Förderflügel (49) in Richtung auf die Eintrittsöffnung (23) des Schneckenrohres (22) des Extruders hin fördernd umläuft.

6. Aufbereitungsvorrichtung nach Anspruch 5, **dadurch gekennzeichnet, dass** der kegelförmige Förderspalt (48) je nach Fördergut eine in Förderrichtung (28) fallende oder steigende Breite aufweist.

7. Aufbereitungsvorrichtung nach Anspruch 5, **dadurch gekennzeichnet, dass** der wenigstens eine Förderflügel (49) am Kegelkörper oder an einem der beiden Kegelkörper (45 oder 46) befestigt umläuft und dann zweiteilig ausgebildet, an den beiden Teilen des Kegelkörpers (45 und 46) angebracht ist.

8. Aufbereitungsvorrichtung nach einem der Ansprüche 5 oder 7, **dadurch gekennzeichnet, dass** dem Förderflügel (49), vorzugsweise beiden Teilen desselben, gegenüberliegend in das Übergangsrohr (21) eine Zustellleiste (50) eingesetzt ist.

9. Aufbereitungsvorrichtung nach einem der Ansprüche 5, 7 oder 8, **dadurch gekennzeichnet, dass** zwischen dem Förderflügel (49), vorzugsweise zwischen beiden Teilen desselben, und der Zustellleiste (50) ein gegen 0 gehender Spalt eingestellt ist.

10. Aufbereitungsvorrichtung nach einem der Ansprüche 8 oder 9, **dadurch gekennzeichnet, dass** die Zustelleiste (50) in einer am Übergangsrohr (21) befestigten Gegenplatte (51) mit Führungen, vorzugsweise durch eine Öffnung im übergangsrohr (21), zustellbar geführt gehalten und mit Verschraubungen, insbesonde-. re mit Zug- und Druckschrauben, befestigt ist.

11. Aufbereitungsvorrichtung nach einem der Ansprüche 5 oder 6, **dadurch gekennzeichnet, dass** der kegelige Förderspalt (48) einen Öffnungswinkel von einigen Graden bis 90°, vorzugsweise von zwischen 20 und 45°, aufweist.

12. Aufbereitungsvorrichtung nach einem der Ansprüche 1 oder 2, **dadurch gekennzeichnet, dass** das an der Innenwand (24) des Förderrohres (6) der Aufbereitertrommel (3), vorzugsweise an der tiefsten Stelle mehrere, in axialer Förderrichtung (28) wirkende, voneinander beabstandete Einblasdüsen (44) angebracht sind.

13. Aufbereitungsvorrichtung nach einem der Ansprüche 1, 2 oder 12, **dadurch gekennzeichnet, dass** das Förderrohr (6) der Aufbereitertrommel (3) mit einem abnehmbar verschraubten Rohrsegment (53) verschlossen ist, das zumindest über ein Viertel des Umfanges reicht, vorzugsweise von der tiefsten Stelle des Förderrohres (6) in Umlaufrichtung (25) der Aufbereitertrommel (3).

14. Aufbereitungsvorrichtung nach einem der Ansprüche 1, 2, 4, 12 oder 13, **dadurch gekennzeichnet, dass** auf der Aufbereitertrommel (3) Messer (4) in mehreren, vorzugsweise in drei, Reihen verteilt und in axialer Richtung (20) untereinander über den Umfang versetzt angeordnet verschraubt sind und mit wenigstens einem ortsfesten Gegenmesser (5), dieses durchgreifend, zusammenarbeiten, das an der Öffnungskante (26) der Zuführungsöffnung (11) des Förderrohres (6) der Aufbereitertrommel (3) angeordnet ist.

15. Aufbereitungsvorrichtung nach einem der Ansprüche 1 oder 14, **dadurch gekennzeichnet, dass** die Zuführungsöffnung (11) der Aufbereitertrommel (3) wenigstens über etwa ein Viertel des Umfanges des Förderrohres (6), von oben bis zu dessen Mitte herabreichend und in axialer Richtung (20), im wesentlichen über die Länge der Aufbereitertrommel (3) angebracht ist, in die der/die Schieber (30) der bewegten Aufgabevorrichtung (2) das Kunststoffmaterial zuführen.

16. Aufbereitungsvorrichtung nach einem der Ansprüche 1, 2, 4 oder 12 bis 15, **dadurch gekennzeichnet, dass** die Drehzahl der Aufbereitertrommel (3) in Abhängigkeit von der Temperatur des Kunststoffmaterials an der Austrittsöffnung (10) des Förderrohrs (6) oder des Fördertroges (38) regelbar ist.

17. Aufbereitungsvorrichtung nach einem der Ansprüche 1 bis 16, **dadurch gekennzeichnet, dass** an der Eintrittsöffnung (23) des Schneckenrohres (22) des Extruders ein Mundstück (58) eingesetzt ist, dessen Innendurchmesser größer ist als der Außendurchmesser der Extruderschnecke (8) und der sich in Förderrichtung (28) bis auf den Außendurchmesser der Extruderschnekke (8) verringert, wobei mehrere Leisten über den Innenumfang verteilt, im wesentlichen den Außendurchmesser der Extruderschnecke (8) freilassend über die Länge des Mundstückes reichen und vorzugsweise Anschrägungen am Beginn des Mundstückes (58) aufweisen.

## Claims

1. Processing device for plastic material, in particular thermoplastic plastic material, comprising a comminution device with a preceding supply shaft, and a directly subsequent extruder device for plastification and/or for granulation and in particular for agglomeration, in which the comminution device comprises a single blade-bearing processing drum (3), which rotates, driven in a substantially horizontally disposed conveying pipe (6), which is provided with a supply opening (11), which is directed upwardly, and provided with an axial outlet opening (10) for the comminuted plastic material, the processing drum (3) being disposed with its longitudinal axis (17) aligned with the longitudinal axis (20) of the extruder worm (8), having a transmission (31) and a drive motor (34) for driving the processing drum (3) and the extruder worm (8), which are connected to each other in a mechanically detachable manner, the outlet opening (10) of the conveyor pipe (6) and the inlet opening (23) of the worm pipe (22) of the extruder worm (8), associated axially one behind the other, being connected to each other via a transition pipe (21) which is flange-mounted on the side of the outlet opening (10) of the conveying pipe (6) on the machine housing (13) of the comminution device and on the side of the inlet opening (23) of the worm pipe (22) of the worm extruder on the latter, **characterised in that**, between the transition pipe (21) and the machine housing (13), a bearing body (32) for the extruder-side bearing (19) of the processing drum (3) is intermediately flange-mounted, the internal bearing part (33) of which bearing body has substantially the diameter of the processing drum (3) and the external supporting ring (36) of which bearing body has a diameter which corresponds substantially to the internal diameter of the conveying pipe (6), and **in that** the internal bearing part (33) and the external supporting ring (36) are connected, supported by a plurality of connecting struts (37) which are shaped to assist the flow.

2. Processing device according to claim 1, **characterised in that** the bearing body (32), which is inserted between the transition pipe (21) and the machine housing (13), for the extruder-side bearing (19) of the processing drum (3) is intermediately flange-mounted, the internal bearing part (33) of which bearing body has substantially the diameter of the processing drum (3) and the external supporting ring (36) of which bearing body has a diameter which corresponds substantially to the internal diameter of the conveying pipe (6) and both are connected, mutually supported, to a plurality of formed connecting struts (37) which are shaped to assist the flow.

3. Processing device according to claim 2, **characterised in that** the inflow pipe (39) and the outflow pipe (40) for air-flushing the bearing, and the lubrication lines are guided in the connecting struts (37).

4. Processing device according to claim 1, **characterised in that** the conical body, which is disposed in the transition pipe (21), is configured as a two-part conical body, the bearing-side conical body (45) of which is fixed on the extruder-side bearing journal of the processing drum (3), preferably with a keyway and feather key connection, and the extruder-side conical body (46) of which, which sits on the extruder worm (8), is screwed to the extruder-side bearing journal of the processing drum (3), or to the bearing-side conical body (45).

5. Processing device according to one of the claims 1 or 4, **characterised in that** a conical conveying gap (48) is formed between the conical body or the two-part conical body (45; 46) and the transition pipe (21), which conical conveying gap has a constant width, in which at least one conveying aisle (49) rotates, conveying in the direction towards the inlet opening (23) of the worm pipe (22) of the extruder.

6. Processing device according to claim 5, **characterised in that** the conical conveying gap (48) has a width which decreases or increases in the conveying direction (28), according to the conveyed material.

7. Processing device according to claim 5, **characterised in that** the at least one conveying aisle (49) rotates, mounted on the conical body or on one of the two conical bodies (45 or 46), and then configured in two parts, is mounted on the two parts of the conical body (45 and 46).

8. Processing device according to one of the claims 5 or 7, **characterised in that** a supply strip (50), situated opposite the conveying aisle (49), preferably opposite both parts of the same, is inserted into the transition pipe (21).

9. Processing device according to one of the claims 5, 7 or 8, **characterised in that** a gap approaching 0 is set between the conveying aisle (49), preferably between both parts of the same, and the supply strip (50).

10. Processing device according to one of the claims 8 or 9, **characterised in that** the supply strip (50) is retained in a counter-plate (51) which is mounted on the transition pipe (21), guided with guides, preferably via an opening in the transition pipe (21), in a feedable manner, and is mounted with screw connections, in particular with tension and pressure screws.

11. Processing device according to one of the claims 5 or 6, **characterised in that** the conical conveying gap (48) has an opening angle of a few degrees up to 90°, preferably of between 20 and 45°.

12. Processing device according to one of the claims 1 or 2, **characterised in that** a plurality of injection nozzles (44), which operate in the axial conveying direction (28) and are spaced apart from each other, are fitted on the internal wall (24) of the conveying pipe (6) of the processing drum (3), preferably at the lowest position.

13. Processing device according to one of the claims 1, 2 or 12, **characterised in that** the conveying pipe (6) of the processing drum (3) is closed by a detachable screw-connected pipe segment (53), which extends at least over a quarter of the circumference, preferably from the lowest position of the conveying pipe (6) in the circumferential direction (25) of the processing drum (3).

14. Processing device according to one of the claims 1, 2, 4, 12 or 13, **characterised in that** blades (4) are screwed on the processing drum (3), distributed in a plurality of rows, preferably in three rows, and disposed in the axial direction (20) mutually offset across the circumference, and cooperate with at least one stationary counter-blade (5), penetrating through the latter, which counter-blade is disposed on the opening edge (26) of the supply opening (11) of the conveying pipe (6) of the processing drum (3).

15. Processing device according to one of the claims 1 or 14, **characterised in that** the supply opening (11) of the processing drum (3) is fitted at least over approximately a quarter of the circumference of the conveying pipe (6), extending down from the top to the middle thereof and in the axial direction (20), substantially over the length of the processing drum (3) into which the slide/ slides (30) of the moving distributor device (2) supply the plastic material.

16. Processing device according to one of the claims 1, 2, 4 or 12 to 15, **characterised in that** the speed of rotation of the processing drum (3) can be regulated dependent upon the temperature of the plastic material at the outlet opening (10) of the conveying pipe (6) or of the conveying trough (38).

17. Processing device according to one of the claims 1 to 16, **characterised in that** a nozzle (58) is inserted at the inlet opening (23) of the worm pipe (22) of the extruder, the internal diameter of which nozzle is larger than the external diameter of the extruder worm (8) and which decreases in the conveying direction (28) to the external diameter of the extruder worm (8), a plurality of strips, distributed across the internal circumference and substantially leaving free the external diameter of the extruder worm (8), extending across the length of the nozzle and preferably having inclinations at the start of the nozzle (58).

## Revendications

1. Dispositif de traitement pour une matière plastique, en particulier thermoplastique, composé d'un broyeur avec une gaine d'amenée montée en amont, et d'une extrudeuse montée juste après, pour la plastification et/ou la granulation et en particulier l'agglomération, le broyeur se composant d'un seul tambour de traitement (3) portant des lames et entraîné en rotation dans un tube d'alimentation (6) qui est disposé sensiblement à l'horizontale et qui est pourvu d'une ouverture d'amenée (11) dirigée vers le haut et d'une ouverture de sortie axiale (10) pour la matière plastique broyée, étant précisé que l'axe longitudinal (17) du tambour de traitement (3) est disposé dans l'alignement de l'axe longitudinal (20) de la vis d'extrudeuse (8), avec une transmission (31) et un moteur d'entraînement (34) pour entraîner le tambour de traitement (3) et la vis d'extrudeuse (8) reliés mécaniquement l'un à l'autre de manière détachable, et que l'ouverture de sortie (10) du tube d'alimentation (6) et l'ouverture d'entrée (23) du tube (22) de la vis d'extrudeuse (8) sont reliées entre elles, en étant associées axialement l'une derrière l'autre, grâce à un raccord (21) qui est relié par bride au carter de machine (13) du broyeur, du côté de l'ouverture de sortie (10) du tube d'alimentation (6), et à l'extrudeuse à vis, du côté de l'ouverture d'entrée (23) du tube (22) de ladite extrudeuse, **caractérisé en ce qu'**il est prévu, monté par bride entre le raccord (21) et le carter de machine (13), un corps d'appui (32) pour le palier (19), prévu côté extrudeuse, du tambour de traitement (3), dont la partie intérieure (33) présente sensiblement le diamètre du tambour (3) et dont la couronne porteuse extérieure (36) présente un diamètre qui correspond sensiblement au diamètre intérieur du tube d'alimentation (6), et **en ce que** la partie intérieure de palier (33) et la couronne porteuse extérieure (36) sont reliées en étant supportées par plusieurs entretoises (37) ayant une forme avantageuse pour l'écoulement.

2. Dispositif de traitement selon la revendication 1, **caractérisé en ce que** le corps d'appui (32) placé entre le raccord (21) et le carter de machine (13) et prévu pour le palier (19), situé côté extrudeuse, du tambour de traitement (3), est fixé par bride et sa partie intérieure (33) présente sensiblement le diamètre du tambour de traitement (3) tandis que sa couronne porteuse (36) présente un diamètre qui correspond sensiblement au diamètre intérieur du tube d'alimentation (6), et les deux sont reliées l'une au-dessous de l'autre en étant supportées par plusieurs entretoises (37) ayant une forme avantageuse pour l'écoulement.

3. Dispositif de traitement selon la revendication 2, **caractérisé en ce que** la conduite d'amenée (39) et la conduite d'évacuation (40) pour le nettoyage par air du palier et les conduites de lubrification passent dans les entretoises (37).

4. Dispositif de traitement selon la revendication 1, **caractérisé en ce que** le corps conique disposé dans le raccord (21) est en deux parties, avec un corps conique (45) prévu côté palier, sur le tourillon du tambour de traitement (3) situé côté extrudeuse, qui est de préférence bloqué avec une rainure et une liaison à clavette sans serrage, et un corps conique (46) prévu côté extrudeuse qui est placé sur la vis d'extrudeuse (8) et qui est relié par vissage au tourillon du tambour (3) situé côté extrudeuse ou au corps conique (45) situé côté palier.

5. Dispositif de traitement selon la revendication 1 ou 4, **caractérisé en ce qu'**il est prévu, formé entre le corps conique ou le corps conique en deux parties (45 ; 46) et le raccord (21), un interstice d'alimentation conique (48) qui présente une largeur constante et dans lequel au moins une aile d'alimentation (49) tourne pour l'alimentation en direction de l'ouverture d'entrée (23) du tube de vis (22) de l'extrudeuse.

6. Dispositif de traitement selon la revendication 5, **caractérisé en ce que** l'interstice d'alimentation conique (48) a une largeur qui va en diminuant ou en augmentant dans le sens d'alimentation (28), suivant le produit.

7. Dispositif de traitement selon la revendication 5, **caractérisé en ce que** l'aile ou les ailes d'alimentation (49) tournent en étant fixées au corps conique ou à l'un des deux corps coniques (45 ou 46) et sont montées, formées ensuite en deux parties, sur les deux parties du corps conique (45 et 46).

8. Dispositif de traitement selon la revendication 5 ou 7, **caractérisé en ce qu'**une barre de réglage (50) est placée dans le raccord (21), en face de l'aile d'alimentation (49), de préférence en face des deux parties de celle-ci.

9. Dispositif de traitement selon la revendication 5, 7 ou 8, **caractérisé en ce qu'**un interstice qui tend vers 0 est réglé entre l'aile d'alimentation (49), de préférence entre les deux parties de celle-ci, et la barre de réglage (50).

10. Dispositif de traitement selon la revendication 8 ou 9, **caractérisé en ce que** la barre de réglage (50) est guidée de manière réglable dans une plaque opposée (51) fixée au raccord (21), avec des guides, de préférence grâce à une ouverture prévue dans le raccord (21), et est fixée à l'aide de vissages, en particulier à l'aide de vis de tension et de vis de pression.

11. Dispositif de traitement selon la revendication 5 ou 6, **caractérisé en ce que** l'interstice d'alimentation conique (48) présente un angle d'ouverture qui va de quelques degrés à 90°, de préférence entre 20 et 45°.

12. Dispositif de traitement selon la revendication 1 ou 2, **caractérisé en ce que** plusieurs injecteurs (44) espacés et agissant dans le sens d'alimentation axial (28) sont montés sur la paroi intérieure (24) du tube d'alimentation (6) du tambour de traitement (3), de préférence à l'endroit le plus bas.

13. Dispositif de traitement selon la revendication 1, 2 ou 12, **caractérisé en ce que** le tube d'alimentation (6) du tambour de traitement (3) est fermé à l'aide d'un segment de tube (53) qui est vissé de manière amovible et qui couvre au moins un quart de la circonférence, de préférence à partir du point le plus bas du tube d'alimentation (6), dans le sens circonférentiel (25) du tambour de traitement (3).

14. Dispositif de traitement selon la revendication 1, 2, 4, 12 ou 13, **caractérisé en ce que** des lames (4) sont réparties sur le tambour de traitement (3) sur plusieurs rangées, de préférence sur trois rangées, sont vissées en étant décalées sur la circonférence dans le sens axial (20) et coopèrent avec au moins une lame opposée fixe (5), en traversant celle-ci, qui est disposée sur le bord (26) de l'ouverture d'amenée (11) du tube d'alimentation (6) du tambour de traitement (3).

15. Dispositif de traitement selon la revendication 1 ou 14, **caractérisé en ce que** l'ouverture d'amenée (11) du tambour de traitement (3) est prévue au moins sur environ un quart de la circonférence du tube d'alimentation (6), du haut jusqu'au milieu de celui-ci, et dans le sens axial (20) sensiblement sur la longueur du tambour (3), dans lequel le/les coulisseaux (30) du dispositif de chargement (2) déplacé amènent la matière plastique.

16. Dispositif de traitement selon l'une des revendications 1, 2, 4 ou 12 à 15, **caractérisé en ce que** la vitesse de rotation du tambour de traitement (3) est réglable en fonction de la température de la matière plastique au niveau de l'ouverture de sortie (10) du tube d'alimentation (6) ou du bac de vis (38).

17. Dispositif de traitement selon l'une des revendications 1 à 16, **caractérisé en ce qu'**on place sur l'ouverture d'entrée (23) du tube (22) de l'extrudeuse un orifice (58) dont le diamètre intérieur est plus grand que le diamètre extérieur de la vis d'extrudeuse (8) et va en diminuant dans le sens d'alimentation (28) jusqu'à atteindre le diamètre extérieur de ladite vis (8), plusieurs rebords répartis sur la circonférence intérieure s'étendant sur la longueur de l'ajutage, en laissant sensiblement dégagé le diamètre extérieur de la vis d'extrudeuse (8), et présentant de préférence des biseaux au début de l'ajutage (58).
